# EUROPÄISCHE PATENTANMELDUNG

(11) **EP 3 462 044 A1**
(43) Veröffentlichungstag der Anmeldung: **03.04.2019**
(21) Anmeldenummer: 18195424.9
(22) Anmeldetag: 19.09.2018
(51) Int. Cl.: F16B 31/04, E04D 3/36, F16B 5/02, F16B 25/00, F16B 33/00

(54) **BEFESTIGUNGSELEMENT**

(30) Priorität: 27.09.2017 DE 102017217147; 29.06.2018 EP 18180697; 12.09.2018 DE 102018215554
(71) Anmelder: Van Roij Fasteners Europe B.V., 5753 DK Deurne (NL)
(72) Erfinder: Bellemakers, Christianus Maria, 5754 GR Deurne (NL); Werner, Jens, 58640 Iserlohn (DE)
(74) Vertreter: Patentanwälte Ruff, Wilhelm, Beier, Dauster & Partner mbB

(57) **Zusammenfassung**

Die Erfindung betrifft ein Befestigungselement zum Befestigen von Dämmstoff an einem Untergrund, insbesondere auf einem Gebäudedach oder an einer Gebäudewand, mit einem Halteelement (1), das einen Halteteller (2) und einen sich vom Halteteller (2) aus erstreckenden rohrartigen Halteabschnitt (3) aufweist. Das Halteelement (1) weist eine sich durch den Halteteller (2) und den Halteabschnitt (3) erstreckende Aufnahmebohrung (4) auf. Eine abschnittsweise in der Aufnahmebohrung (4) angeordneten Schraube (5) weist einen Schraubenkopf mit einer Antriebsausbildung und einen Schaft (6) auf, der wenigstens abschnittsweise mit einem Gewinde (7) versehen ist. Das Gewinde (7) der Schraube weist mehrere Abschnitte (146,148,150) mit unterschiedlichen Steigungen auf, wobei eine erste Steigung in einem vom freien Ende der Schraube ausgehenden ersten Abschnitt (146) größer ist als in einem zwischen dem schraubenkopfseitigen Ende des ersten Abschnitts (146) und dem Schraubenkopf angeordneten zweiten Abschnitt (150).

## Beschreibung

Die Erfindung betrifft ein Befestigungselement zum Befestigen von Dämmstoff an einem Untergrund, insbesondere auf einem Gebäudedach oder an einer Gebäudewand, mit einem Halteelement, das einen Halteteller und einen sich vom Halteteller aus erstreckenden rohrartigen Halteabschnitt aufweist. Das Halteelement weist eine sich durch den Halteteller und den Halteabschnitt erstreckende Aufnahmebohrung auf. Eine abschnittsweise in der Aufnahmebohrung angeordneten Schraube weist einen Schraubenkopf mit einer Antriebsausbildung und einen Schaft auf, der wenigstens abschnittsweise mit einem Gewinde versehen ist.

Aus der Offenlegungsschrift DE 39 13 298 A1 ist ein Befestigungselement bekannt, das einen Halteteller und einen rohrartigen Halteabschnitt aufweist. Der Halteteller und das Halteelement weisen eine Aufnahmebohrung auf, in welcher eine Schraube angeordnet ist. Weiterhin ist in dem Halteabschnitt eine Schraubenmutter angeordnet, die mit einem Gewinde der Schraube zusammenwirkt, um eine Bohrspitze der Schraube in eine Unterkonstruktion einzutreiben.

Mit der Erfindung soll ein Befestigungselement zum Befestigen von Dämmstoff an einem Untergrund, insbesondere auf einem Gebäudedach oder an einer Gebäudewand, dahingehend verbessert werden, dass eine vereinfachte Befestigung des Dämmstoffs möglich ist.

Erfindungsgemäß ist hierzu ein Befestigungselement mit den Merkmalen von Anspruch 1 vorgesehen. Vorteilhafte Weiterbildungen sind in den Unteransprüchen angegeben.

In der Aufnahmebohrung können Sperrmittel vorgesehen sein, die einerseits an dem Halteelement und andererseits an dem Schaft der Schraube angreifen, um eine Bewegung des Haltetellers relativ zur Schraube in Richtung auf das dem Schraubenkopf gegenüberliegende Schraubenende zu ermöglichen und um eine Bewegung des Haltetellers relativ zur Schraube in der Gegenrichtung, von dem Schraubenende weg, zu sperren.

Vorteilhaft ist damit ein Fixieren des Dämmstoffes sowie ein Nachspannen des Befestigungselementes durch eine Bewegung des Haltetellers in einer Befestigungsrichtung, als in eine Richtung auf eine Unterkonstruktion zu, möglich. Da sich im Laufe eines Lebenszyklus eines gedämmten Daches eine Schrumpfung des Dämmstoffs einstellen kann, kann es nötig werden, die Halteelemente nachzuspannen, um einen sicheren Halt des Dämmmaterials auf der Unterkonstruktion zu gewährleisten. Ein Lockern des Haltetellers entgegen der Befestigungsrichtung wird durch eine Sperrwirkung der Sperrmittel verhindert.

Beim Anbringen des Befestigungselementes wird zunächst die Schraubenspitze auf den Untergrund oder den Dämmstoff aufgesetzt und gedreht, so dass die Schraube mit einer Antriebseinrichtung rotiert und sich eine Schraubenspitze oder eventuell vorhandene Schneiden der Schraubenspitze in die Unterkonstruktion bohrt. Ist das Gewinde der Schraube ausreichend tief in die Unterkonstruktion eingedreht, kann das Halteelement noch relativ zur Schraube auf die Unterkonstruktion zu bewegt werden. Dabei wirken die Sperrmittel als eine Art Freilauf, die eine Bewegung des Halteelements in der Befestigungsrichtung, also auf die Unterkonstruktion zu, erlauben, eine Bewegung des Halteelements entgegen der Befestigungsrichtung jedoch verhindern. Somit kann ein Befestigungselement an einer Unterkonstruktion befestigt und nachträglich gegen den Dämmstoff gespannt werden, ein selbsttätiges Lösen des Befestigungselements wird aber wirkungsvoll verhindert, ohne dass weitere Sicherungsmittel wie Schraubenkleber und Feder- oder Zahnscheiben verwendet werden müssen.

In Weiterbildung der Erfindung weisen die Sperrmittel einen in der Aufnahmebohrung angeordneten Käfig und wenigstens einen in dem Käfig angeordneten Sperrkörper auf, wobei sich der Schaft der Schraube durch den Käfig hindurcherstreckt und wobei der wenigstens eine Sperrkörper zwischen einer Innenwand des Käfigs und dem Schaft angeordnet ist.

Vorteilhaft kann somit ein Verkeilen des wenigstens einen Sperrkörpers zwischen dem Schaft und einem Bereich der Käfigs erfolgen, wodurch eine Bewegung des Halteelements entgegen der Befestigungsrichtung verhindert wird. Der Käfig kann ein zusätzliches Bauteil sein, das in einem Bereich der Aufnahmebohrung angeordnet wird. Er kann beispielsweise aus Stahl oder Keramik oder auch aus Kunststoff hergestellt sein. Die Sperrelemente können ebenso aus Stahl oder Keramik oder aus Kunststoff hergestellt sein. Bevorzugt können drei bis fünf Sperrelemente in einem Käfig angeordnet sein, jedoch ist die Verwendung von nur einem Sperrelement oder auch bis zu 20 Sperrelementen möglich. Der Begriff Käfig ist allgemein zu verstehen, muss also nicht aus Gitterstäben bestehen sondern kann auch mit durgehenden Wänden ausgebildet sein.

In Weiterbildung der Erfindung ist der Sperrkörper als Kugel, Stift oder Polyeder ausgebildet ist.

Neben Kugeln und Stiften können bspw. pyramiden- oder würfelförmige Polyeder als Sperrkörper verwendet werden. Die Erfindung ist jedoch nicht nur auf diese Formen ausgerichtet, auch jede andere Polyederform ist denkbar. Es ist auch denkbar, dass mehr als eine Form von Sperrkörpern gleichzeitig in einem Befestigungselement verwendet wird.

In Weiterbildung der Erfindung ist der Käfig in Form einer Hülse ausgebildet.

Die Hülse kann ein zusätzlich in die Aufnahmebohrung eingefügtes Bauteil aus Stahl, Kunststoff oder Keramik sein, in welchem die Sperrelemente angeordnet sind und den Schaft und insbesondere einen Gewindegang oder mehrere Gewindegänge des Schafts abschnittsweise umgeben.

In Weiterbildung der Erfindung weist ein Innenraum des Käfigs einen zylindrischen Mittenbereich und wenigstens einen sich in Richtung auf den Schaft der Schraube zu verjüngenden Endbereich auf.

Mittels des sich verjüngenden Endbereichs kann der wenigstens eine Sperrkörper in einem definierten Abschnitt des Käfigs fixiert werden, um die Schraube gegenüber dem Halteabschnitt zu verklemmen und damit zu sperren. Bevorzugt ist der verjüngte Endbereich in einem der Schraubenspitze zugewandten Bereich des Käfigs angeordnet. Vorteilhaft ist auch eine Ausführung mit zwei verjüngten Endbereichen des Käfigs, einer in dem der Schraubenspitze zugewandten und einer in dem der Schraubenspitze abgewandten Bereich des Käfigs. Somit können die Sperrmittel verlustsicher in beide Richtungen gesichert werden und können nicht aus dem Käfig herausfallen.

In Weiterbildung der Erfindung ist ein radialer Spalt zwischen dem Schaft der Schraube und den Stirnseiten des Innenraums des Käfigs kleiner ist als ein Durchmesser des Sperrkörpers.

Somit kann der Sperrkörper nicht durch den Spalt hindurchtreten und ist verlustsicher im Käfig angeordnet.

In Weiterbildung der Erfindung weist der Innenraum des Käfigs einen zylindrischen Mittenbereich und wenigstens einen sich in Richtung auf den Schaft der Schraube zu verjüngenden Endbereich auf, wobei der Endbereich mit einem Sperrabschnitt versehen ist. Ein innerhalb des Käfigs angeordneter Halteabschnitt des Schafts ist mit dem Gewinde versehen und ein Durchmesser des Sperrkörpers ist kleiner als ein Abstand in Längsrichtung des Schafts zwischen zwei aufeinanderfolgenden Gewindeflanken des Gewindes, kleiner als ein Abstand in radialer Richtung des Schafts zwischen einer radialen Außenkante der Gewindeflanken und einer Innenwand des Käfigs im Mittenbereich und größer als ein Abstand in radialer Richtung des Schafts zwischen einer radialen Außenkante der Gewindeflanken und dem Sperrabschnitt im Endbereich des Käfigs.

Der wenigstens eine Sperrkörper kann also nicht an einer Außenseite des Schraubengewindes über die Gewindeflanken entlangwandern und den Käfig verlassen. Da der Durchmesser des Sperrkörpers kleiner ist als ein Abstand zwischen zwei aufeinanderfolgende Gewindeflanken, kann der Sperrkörper zwischen zwei Gewindeflanken angeordnet werden. Da ein Durchmesser des Sperrkörpers kleiner ist als ein Abstand in radialer Richtung des Schafts zwischen einer radialen Außenkante der Gewindeflanken und einer Innenwand des Käfigs im Mittenbereich, kann die Schraube relativ zum Käfig verschoben werden, wenn sich der Sperrkörper oder die Sperrkörper im Mittenbereich des Käfigs befinden. Da ein Durchmesser des Sperrkörpers größer ist als ein Abstand in radialer Richtung des Schafts zwischen einer radialen Außenkante der Gewindeflanken und dem Sperrabschnitt im Endbereich des Käfigs kann eine Bewegung der Schraube relativ zum Käfig und auf den Endbereich des Käfigs zu gesperrt werden, wenn sich der Sperrkörper oder die Sperrkörper im Sperrabschnitt befinden. Auf diese Weise kann also mittels des Käfigs und der Sperrkörper eine Art Freilauf zwischen der Schraube und dem Halteelement erzielt werden.

In Weiterbildung der Erfindung weisen die Sperrmittel eine Buchse auf, die in der Aufnahmebohrung angeordnet ist und durch die sich der Schaft der Schraube hindurcherstreckt. Eine dem Schraubenkopf zugewandte Stirnfläche der Buchse ist relativ zur Längsrichtung des Schafts abgeschrägt und auf der abgeschrägten Stirnseite der Buchse ist eine Sperrscheibe angeordnet, die eine Mittenbohrung aufweist, durch die sich der Schaft der Schraube hindurcherstreckt.

Mittels der abgeschrägten Buchse und der Sperrscheibe kann ebenfalls eine Sperrwirkung zwischen Haltelement und Schraube nach Art eines Freilaufs erzielt werden.

Vorteilhaft kann die Buchse ein einstückiger Bestandteil des Halteelements sein, sie kann auch als separates Bauteil aus Stahl, Kunststoff oder Keramik ausgeführt sein.

In Weiterbildung der Erfindung ist ein Durchmesser der Mittenbohrung der Sperrscheibe größer als ein Außendurchmesser des Gewindes am Schaft. Die Sperrscheibe greift in einer auf der abgeschrägten Stirnseite der Buchse aufliegenden Position zwischen wenigstens zwei Gewindeflanken des Gewindes des Schafts ein und sperrt eine Bewegung der Buchse relativ zum Schaft in Richtung auf den Schraubenkopf zu.

Vorteilhaft kann durch eine Ausrichtung der Scheibe gegenüber der Buchse in eine relativ zum Schaft der Schraube schräge Lage der Scheibe ein Verkeilen der Scheibe zwischen der Buchse und der Aufnahmebohrung des Haltelements stattfinden, sodass eine Bewegung des Halteelements entgegen der Befestigungsrichtung des Haltelements verhindert wird.

Die Buchse kann einstückig mit dem Halteelement ausgebildet sein.

In Weiterbildung der Erfindung weisen die Sperrmittel eine Buchse auf, die in der Aufnahmebohrung angeordnet ist und durch die sich der Schaft der Schraube hindurch erstreckt, wobei eine dem Schraubenkopf zugewandte Stirnseite der Buchse wenigstens abschnittsweise mit einer wendelförmigen und nach innen, zum Schaft der Schraube hin geneigten Anlagefläche für wenigstens einen Sperrkörper versehen ist.

Indem eine Buchse mit einer nach innen und zum Schaft der Schraube hin geneigten, wendelförmigen Anlagefläche versehen ist, wird eine vergleichsweise große Kontaktfläche zwischen dem Sperrkörper und der Anlagefläche auf der Buchse einerseits und den Gewindeflanken und dem Sperrkörper andererseits erreicht. Dadurch können entweder sehr große Sperrkräfte übertragen werden oder der Sperrkörper kann nur eine kleine Fläche aufweisen. Als Sperrkörper können im Wesentlichen beliebig geformte Sperrkörper eingesetzt werden, die auf der wendelförmigen Anlagefläche nach innen rutschen und in Kontakt mit den Gewindeflanken des Gewindes der Schraube kommen können. Besonders gut geeignet sind Kugeln, Stifte oder auch schraubenfederförmige Sperrkörper.

In Weiterbildung der Erfindung entspricht eine Steigung der wendelförmigen Anlagefläche im Wesentlichen der Steigung des Gewindes der Schraube.

Auf diese Weise können entweder mehrere Sperrkörper, beispielsweise Kugeln, hintereinander auf der Anlagefläche der Buchse liegen und gleichzeitig in Kontakt mit einer Gewindeflanke der Schraube sein. Dadurch lassen sich hohe Sperrkräfte erzielen. Auch ein Sperrkörper in Form einer Schraubenfeder kann durch eine solche Gestaltung der Anlagefläche über einen vergleichsweise großen Winkelbereich einerseits an der Anlagefläche der Buchse und andererseits an einer Gewindeflanke des Gewindes der Schraube anliegen, so dass auch auf diese Weise große Sperrkräfte erzielt werden können.

In Weiterbildung der Erfindung erstreckt sich die wendelförmige Anlagefläche über einen Winkel von 45° bis 360°, insbesondere 270°.

Speziell bei einem Winkel von 270° lassen sich hohe Sperrkräfte erzielen, beispielsweise durch Sperrkörper in Form mehrerer Kugeln und/oder Sperrkörper in Form einer Schraubenfeder, und dennoch ist sichergestellt, dass sich der Sperrkörper auch wieder lösen kann, wenn dies durch eine entsprechende Relativbewegung zwischen Buchse und Schraube erfolgt. Bei kleinen Winkelbereichen der wendelförmigen Anlagefläche können auch mehrere wendelförmige Anlageflächen über die Stirnseite der Buchse verteilt sein.

In Weiterbildung der Erfindung ist wenigstens ein als Kugel ausgebildeter Sperrkörper vorgesehen.

Die wendelförmige und nach innen geneigte Anlagefläche funktioniert sehr gut mit kugelförmigen Sperrkörpern. Mehrere kugelförmige Sperrkörper können hintereinander auf der wendelförmigen Anlagefläche aufliegen und rollen der Schwerkraft folgend nach innen, in Richtung auf den Schaft der Schraube zu. Die Sperrkörper liegen dann einerseits am Schaft der Schraube in einem Bereich zwischen zwei Gewindeflanken an und andererseits auf der Anlagefläche der Buchse. In dieser Position können die Sperrkörper dann ihre Sperrwirkung entfalten.

In Weiterbildung der Erfindung ist ein als Schraubenfeder ausgebildeter Sperrkörper vorgesehen, wobei ein Innendurchmesser der Schraubenfeder größer ist als ein Außendurchmesser des Gewindes der Schraube und wobei eine Steigung der Schraubenfeder im Wesentlichen der Steigung des Gewindes der Schraube entspricht.

Die Ausbildung des Sperrkörpers als Schraubenfeder ermöglicht eine vergleichsweise einfache Handhabung, vor allem beim Montieren des erfindungsgemäßen Befestigungselements. Die Schraubenfeder wird wie die Buchse einfach über den Schaft der Schraube geschoben. Die Schraubenfeder kann sich dabei über mehr als 360° erstrecken und beispielsweise über zwei vollständige Windungen, also 720°. Eine Drahtdicke der Schraubenfeder ist so gewählt, dass sie kleiner ist als ein Abstand zwischen zwei Gewindeflanken des Gewindes der Schraube und größer ist als ein radialer Abstand zwischen dem Außendurchmesser des Gewindes der Schraube und dem Innendurchmesser der Buchse. Bei Verwendung von Runddraht für die Schraubenfeder kann die Drahtdicke in etwa dem Abstand zwischen zwei Gewindegängen des Gewindes der Schraube entsprechen. Wesentlich ist, dass die Schraubenfeder einerseits über das Gewinde der Schraube rutschen kann und dann, wenn die Schraubenfeder abschnittsweise auf der Anlagefläche der Buchse anliegt, sich die Schraubenfeder mit ihrem auf der Anlagefläche der Buchse anliegenden Abschnitt gleichzeitig an einer Gewindeflanke des Gewindes der Schraube abstützt und dadurch eine Sperrwirkung entfaltet.

In Weiterbildung der Erfindung weist die Aufnahmebohrung im Halteelement eine Stufe oder eine Verengung auf. Ein Innendurchmesser der Aufnahmebohrung zwischen dem Halteteller und der Stufe oder Verengung ist größer als ein Durchmesser des Schraubenkopfes und ein Innendurchmesser der Aufnahmebohrung an der Stufe oder Verengung ist kleiner ist als der Durchmesser des Schraubenkopfes und größer als der Außendurchmesser des Schafts.

Somit kann der Schraubenschaft vorteilhaft durch die Aufnahmebohrung durchgesteckt werden, ein Verlust der Schraube ist in der Befestigungsrichtung des Haltelements jedoch nicht möglich, da der Kopf nicht die Verengung der Aufnahmebohrung passieren kann.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. Einzelmerkmale der verschiedenen Ausführungsformen können dabei in beliebiger Weise kombiniert werden, ohne den Rahmen der Erfindung zu überschreiten. Dies gilt auch für die Kombinationen von Einzelmerkmalen ohne weitere Merkmale mit denen sie im Zusammenhang beschrieben oder dargestellt sind. In den Zeichnungen zeigen:
- Fig. 1: eine auseinandergezogene Darstellung eines Befestigungselements gemäß einer ersten Ausführungsform der Erfindung,
- Fig. 2: eine Schnittansicht des Befestigungselements der Fig. 1,
- Fig. 3: weitere Schnittansichten des in Fig. 1 und 2 dargestellten Befestigungselements in drei verschiedenen Befestigungsstadien,
- Fig. 4: eine auseinandergezogene Darstellung eines Befestigungselements gemäß einer zweiten Ausführungsform der Erfindung,
- Fig. 5: eine Schnittansicht des Befestigungselements der Fig. 4,
- Fig. 6: weitere Schnittansichten des in Fig. 4 und 5 dargestellten Befestigungselements in drei verschiedenen Befestigungsstadien,
- Fig. 7: eine teilweise Schnittansicht des Befestigungselements der Fig. 3,
- Fig. 8: eine auseinandergezogene Darstellung eines Befestigungselements gemäß einer dritten Ausführungsform der Erfindung,
- Fig. 9: eine Ansicht der Buchse des Befestigungselements der Fig. 8 von schräg oben,
- Fig. 10: eine teilweise geschnittene Darstellung des Befestigungselements der Fig. 8 in einem montierten ersten Zustand,
- Fig. 11: das Befestigungselement der Fig. 10 in einem zweiten Zustand,
- Fig. 12: eine teilweise Darstellung eines Befestigungselements gemäß einer vierten Ausführungsform in einem montierten ersten Zustand,
- Fig. 13: das Befestigungselement der Fig. 12 in einem montierten zweiten Zustand,
- Fig. 14: eine Schraube für ein Befestigungselement gemäß einer fünften Ausführungsform,
- Fig. 15: eine teilweise geschnittene Darstellung eines Befestigungselements gemäß der fünften Ausführungsform in einem montierten ersten Zustand und
- Fig. 16: das Befestigungselement der Fig. 15 in einem zweiten Zustand.

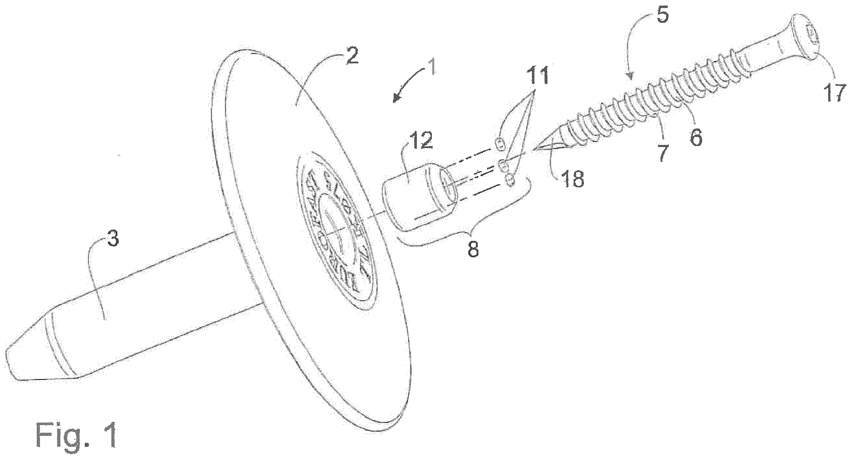

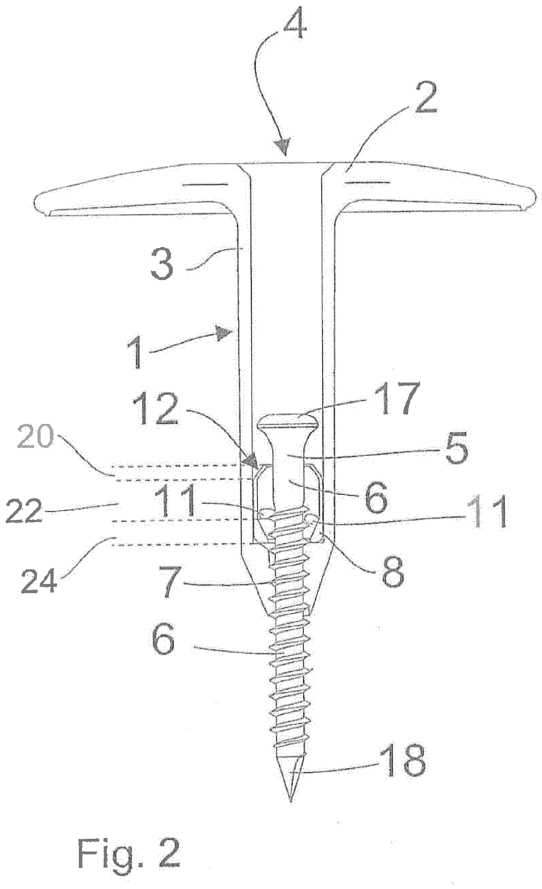

In den Fig. 1 zeigt ein erfindungsgemäßes Befestigungselement mit einem Halteelement 1, das einen zylindrischen Halteabschnitt 3 und einen zylindrischen, radial über den Halteabschnitt überstehenden Halteteller 2 aufweist. Das Halteelement 1, siehe Fig. 2, ist von einer Aufnahmebohrung 4 durchdrungen, die in einem dem Halteteller 2 abgewandten Bereich einen verringerten Durchmesser aufweist. In der Aufnahmebohrung 4 ist eine Schraube 5 angeordnet, die in dem, dem Halteteller 2 abgewandten Bereich mit ihrer Schraubenspitze 18 über das Halteelement 1 herausragt. Die Schraubenspitze 18 ist im dargestellten Ausführungsbeispiel mit einer Schneide und somit als selbstbohrende Schraube ausgeführt, es ist jedoch auch möglich, dass lediglich eine Schraubenspitze 18 ohne Schneide vorhanden ist oder aber eine Schraubenspitze 18 mit mehreren Schneiden. An einem Schaft 6 der Schraube 5 ist ein Gewinde 7 angeordnet. Das Gewinde 7 reicht bei der dargestellten Ausführungsform nicht ganz bis zu einem Schraubenkopf 17, kann sich im Rahmen der Erfindung aber auch bis zum Schraubenkopf 17 erstrecken. Der gewindefreie Bereich unter dem Schraubenkopf 17 soll maximal der Länge eines Käfigs 12 entsprechen, damit die Schraube 5 mittels des Gewindes 7 relativ zu dem Käfig 12 verschiebbar ist. Auch die Schraubenspitze 18 ist frei von Gewinde 7. Im dargestellten Ausführungsbeispiel weist das Gewinde 7 eine konstante Steigung und eine konstante Flankenhöhe auf, jedoch ist auch eine Ausführungsform mit nicht konstanter Steigung und Flankenhöhe möglich. Gegenüber der Spitze 18 ist der Schraubenkopf 17 mit einer Drehantriebsausbildung angeordnet.

In der Aufnahmebohrung 4 sind unmittelbar oberhalb des Bereichs mit verringertem Durchmesser Sperrmittel 8 angeordnet.

Die Sperrmittel 8 weisen einen Käfig 12 und in dem Käfig 12 bewegliche walzenartige Sperrkörper 11 auf.

Der Käfig 12 wird als Käfig bezeichnet, da er eine Halterung für die walzenartigen Sperrkörper 11 bildet, so wie ein Kugellager einen Lagerkäfig aufweist. Der Käfig 12 besteht aber nicht aus Gitterstäben, sondern aus einer Stahlhülse.

Wie in Fig. 2 zu erkennen ist, ist der Käfig 12 in der Aufnahmebohrung 4 fixiert, und zwar liegt der Käfig 12 mit seiner Unterseite auf einem Absatz in der Aufnahmebohrung 4, beispielsweise durch Einpressen oder Einkleben, auf, an dem sich der Durchmesser der Aufnahmebohrung 4 verringert. Der Käfig 12 weist in seiner Längsrichtung gesehen einen Anfangsabschnitt 20 auf, der sich ausgehend von dem in Fig. 2 oberen Ende des Käfigs 12 kegelstumpfartig erweitert. An den Anfangsabschnitt 20 schließt sich ein Mittenbereich 22 des Käfigs 12 an, der zylindrisch ausgeführt ist. Auf den Mittenbereich 22 folgt ein sich kegelstumpfartig verjüngender Endbereich, der bei der dargestellten Ausführungsform einem Sperrabschnitt 24 entspricht.

Ein Durchmesser der walzenartigen Sperrkörper 11 ist größer als ein Abstand zwischen dem Schaft 6 der Schraube 5 und einer Innenwand der Durchgangsöffnung am oberen Ende des Käfigs 12, so dass also die Sperrkörper 11 nicht am oberen Ende des Käfigs 12 aus diesem herausfallen können. In gleicher Weise ist ein Abstand zwischen dem Schaft der Schraube 6 und der Innenwand der Durchgangsöffnung am unteren Ende des Käfigs 12 kleiner als ein Durchmesser der Sperrkörper 11, so dass die Sperrkörper 11 auch am unteren Ende des Käfigs 12 nicht aus diesem herausfallen können. Wenn die Schraube 5, wie in Fig. 1 dargestellt ist, noch nicht in den Käfig 12 eingeführt ist, können die Sperrkörper 11 problemlos innerhalb des Käfigs 12 angeordnet werden.

Im Anfangsabschnitt 20 des Käfigs 12 erweitert sich der Innenraum des Käfigs 12 bis auf den Innendurchmesser des Mittenbereichs. Im zylindrischen Mittenbereich ist ein Abstand zwischen einer radialen Außenkante der Gewindeflanken des Gewindes 7 der Schraube 5 und einer Innenwand des Käfigs 12 im Mittenbereich größer als ein Durchmesser der Sperrkörper 11. Die Sperrkörper 11 können damit zwischen der Innenwand des Mittenbereichs 22 und den radialen Außenkanten der Gewindeflanken hindurchbewegt werden. Wenn sich die Sperrkörper 11 somit alle im Mittenbereich 22 des Käfigs 12 befinden, kann die Schraube 5 in ihrer Längsrichtung relativ zum Käfig 12 bewegt werden.

Ein Durchmesser der Sperrkörper 11 ist auch kleiner als ein Abstand zwischen zwei Gewindeflanken in Längsrichtung der Schraube 5 gesehen. Wie auf der rechten Seite des Käfigs 12 in Fig. 2 dargestellt ist, kann also ein Sperrkörper 11 zwischen zwei Gewindeflanken angeordnet werden.

Im Sperrabschnitt 24, der sich kegelstumpfförmig zum Ende des Käfigs 12 hin verjüngt, ist ein Abstand in radialer Richtung der Schraube 5 zwischen den radialen Außenkanten der Gewindeflanken und der Innenwand des Käfigs 12 kleiner als ein Durchmesser der Sperrkörper 11. Sind die Sperrkörper 11 im Sperrabschnitt 24 angeordnet, so werden sie infolgedessen zwischen zwei Gewindeflanken und der Innenwand des Käfigs 12 im Sperrabschnitt 24 eingeklemmt. Wenn sich ein Sperrkörper 11 somit im Sperrabschnitt 24 befindet, kann die Schraube 5 nicht vom Halteteller 2 weg nach unten gedrückt werden und der Halteteller 2 kann auch nicht relativ zur Schraube 5 nach oben bewegt werden. Eine Bewegung des Haltetellers 2 relativ zur Schraube 5 und vom Schraubenende 18 weg ist also gesperrt, wenn sich wenigstens einer der Sperrkörper 11 im Sperrabschnitt 24 befindet.

Die Sperrkörper 11 gelangen in der Position der Fig. 2, wenn also der Halteteller 2 oberhalb der Schraube 5 angeordnet ist, durch die Schwerkraft automatisch in den Sperrabschnitt 24.

Auf der anderen Seite kann, auch wenn sich wenigstens ein Sperrkörper 11 im Sperrabschnitt 24 befindet, der Käfig 12 und damit auch das Halteelement 1 relativ zur Schraube 5 nach unten, also in Richtung auf die Schraubenspitze 18 zu, bewegen. Denn wenn der Halteteller 2 in der Darstellung der Fig. 2 nach unten gedrückt wird, werden die Sperrkörper 11 von den Gewindeflanken relativ zum Käfig 12 nach oben transportiert und gelangen dadurch in den Mittenbereich 22 des Käfigs 12. Dies ist auf der linken Seite des Käfigs 12 in Fig. 2 dargestellt.

Mit anderen Worten ist eine Bewegung des Haltetellers 2 in Fig. 2 nach oben, also von der Schraubenseite 18 weg, gesperrt, wohingegen eine Bewegung des Haltetellers 2 in Richtung auf die Schraubenspitze 18 zu ermöglicht ist. Durch die im Anfangsabschnitt 20 und im Sperrabschnitt 24 verjüngte Formgebung des Käfigs 12 wird gleichzeitig verhindert, dass die Sperrkörper 11 aus dem Käfig 12 herausfallen, wenn die Schraube 5 sich durch den Käfig 12 hindurcherstreckt.

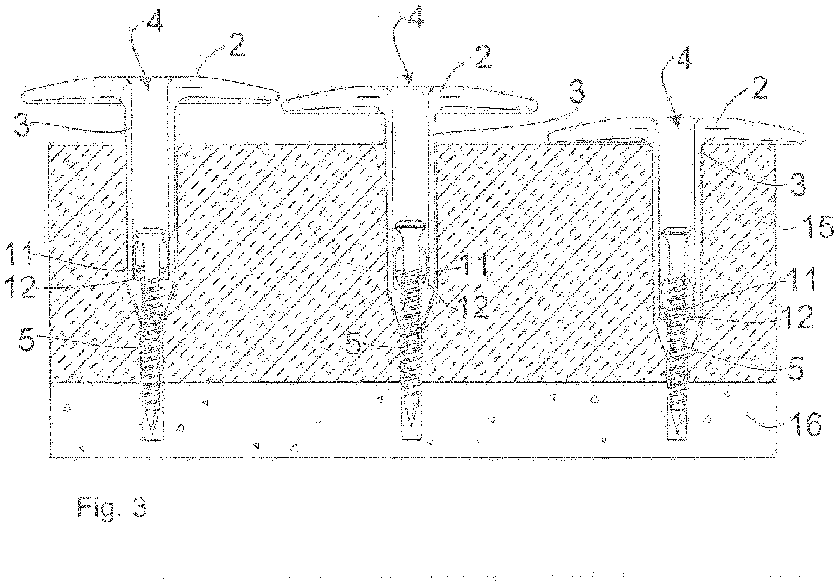

Die Darstellung der Fig. 3 zeigt drei verschiedene Befestigungsstadien beim Anbringen des erfindungsgemäßen Befestigungselements an einem Untergrund.

In Fig. 3 sind verschiedene Befestigungsstadien des Befestigungselements der Fig. 1 und 2 dargestellt, wobei die linke Darstellung der Fig. 3 das in Fig. 1 gezeigte Befestigungselement zeigt, dessen Gewinde 7 bereits teilweise in einen Untergrund 16 eingeschraubt ist. Das Befestigungselement erstreckt sich bereits vollständig durch einen Dämmstoff 15 hindurch, der auf dem Untergrund 16 angebracht ist. Beispielsweise bildet der Untergrund 16 eine Dachfläche, auf die der Dämmstoff 15 aufgelegt ist. Im ganz links dargestellten Zustand der Fig. 3 ist, wie erwähnt wurde, die Schraube 5 zwar bereits abschnittsweise in den Untergrund 16 eingeschraubt und damit sicher im Untergrund 16 verankert, der Halteteller 2 hat in Längsrichtung der Schraube 5 gesehen aber noch einen Abstand zur Oberseite des Dämmstoffs 15. Der ganz links dargestellte Zustand kann somit beim erstmaligen Montieren des Befestigungselements auftreten, aber auch einige Zeit nach der Montage, wenn gegebenenfalls der Dämmstoff 15 schrumpft. Im ganz links dargestellten Zustand des Befestigungselements sind die Sperrkörper 11 und auch der vollständige Käfig 12 oberhalb des Gewindes der Schraube 5 angeordnet. Der Käfig 12 könnte aber auch das Gewinde der Schraube 5 umgebend angeordnet sein, an der Funktion der Sperrkörper 11 und des Käfigs 12 ändert sich dadurch nichts.

Eine mittlere Darstellung in Fig. 3 zeigt das Befestigungselement in einem Zustand, in dem das jeweilige Halteelement 1 ein Stückweit auf den Untergrund 16 zu verlagert ist. In einer rechten Darstellung in Fig. 3 ist ein Zustand des Befestigungselements dargestellt, in welchem der Halteteller 2 an dem Dämmstoff 15 anliegt. In diesem Zustand kann der Halteteller 2 unter Spannung auf der Oberfläche des Dämmstoffs 15 aufliegen.

Um den Distanzbefestiger von Fig. 3 aus dem Zustand gemäß der linken Darstellung in den Zustand gemäß der rechten Darstellung in Fig. 3 zu überführen, wird nach dem Einschrauben der Schraubenspitze 18 und des Gewindes 7 durch den Dämmstoff 15 in den Untergrund 16 durch eine Bedienperson Druck auf den Halteteller 2 in Richtung auf den Untergrund 16 ausgeübt. Dabei wird das Haltelement 1 in Richtung auf den Untergrund 16 zu verschoben. Die Stifte 11 folgen schwerkraftbedingt in Befestigungsrichtung, in Fig. 3 nach unten, wobei sie zwischen der Innenwand des zylindrischen Mittenbereichs 22 des Käfigs 12 und dem Gewinde 7 entlangwandern. Dies ist deshalb möglich, da der Durchmesser der Sperrkörper 11 kleiner ist als ein Abstand in radialer Richtung des Schafts der Schraube zwischen den radialen Außenkanten der Gewindeflanken und einer Innenwand des Käfigs im Mittenbereich 22. Wenn der Halteteller 2 in der linken Darstellung der Fig. 3 also nach unten gedrückt wird, rutscht der Käfig 12 entlang dem Schraubenschaft nach unten, wobei der Käfig 12 und die Sperrkörper 11 an den Außenkanten der Gewindeflanken vorbeigelangen und somit entlang dem Gewinde nach unten wandern.

Im Sperrabschnitt 24 des Käfigs 12 weist dieser einen verringerten Innendurchmesser auf, so dass ein Abstand zwischen der Innenwand des Sperrabschnitts 24 und den Außenkanten der Gewindeflanken kleiner ist als der Durchmesser der Sperrkörper 11. Die Sperrkörper 11 kommen also zwischen der Innenwand des Käfigs 12 und dem Gewinde zum Anliegen, wenn der Halteteller seine Position gemäß der rechten Darstellung in Fig. 3 eingenommen hat, also auf dem Dämmstoff 15 aufliegt. Da die Sperrkörper 11 einen größeren Querschnitt aufweisen als der Abstand zwischen Gewindeflanken des Gewindes 7 und dem Bereich des verringerten Innendurchmesser des Käfigs 12 im sperrabschnitt 24, sind die Sperrkörper 11 gegen das Gewinde 7 und den Käfig 12 verkeilt und blockieren somit eine Bewegung des Halteelements 1 entgegen der Befestigungsrichtung, in Fig. 3 also nach oben. Somit wird einem Lockern des Befestigungselements entgegengewirkt.

Der Käfig 12 und die Sperrkörper 11 sorgen also für die Realisierung eines Freilaufs zwischen dem Halteelement 1 und der Schraube 5. Ausgehend von der in Fig. 3 linken Darstellung kann das Halteelement 1 nach unten gedrückt werden, da dann die Sperrkörper 11 zwischen der Innenwand des Käfigs 12 im Mittenbereich 22 und den radialen Außenkanten der Gewindeflanken hindurchgelangen. Ausgehend von dem in Fig. 3 rechten Zustand kann das Halteelement 1 aber nicht relativ zur Schraube 5 nach oben gezogen werden, da sich dann die Sperrkörper 11 zwischen der Innenwand des Käfigs 12 im Sperrabschnitt 24 und den Gewindeflanken des Gewindes der Schraube 5 verkeilen.

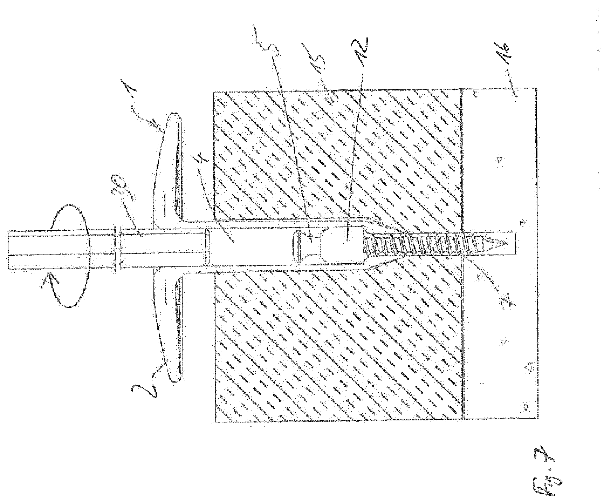

Alternativ kann, um den Distanzbefestiger in Fig. 3 aus dem Zustand gemäß der linken Darstellung in den Zustand gemäß der rechten Darstellung in Fig. 3 zu überführen, der Halteteller 2 auch relativ zur Schraube 5 verdreht und dadurch nach unten geschraubt werden. Das Drehen des Haltetellers 2 erfolgt mit einem Werkzeug 20, das abschnittsweise in die Aufnahmebohrung 4 eingreift, erfolgen, wie in Fig. 7 dargestellt ist. Der Käfig 12, die Sperrkörper 11 und das Gewinde 7 der Schraube 5 wirken dabei ähnlich wie eine Kugelumlaufspindel. Der Käfig 12 kann nicht weiter nach unten rutschen, da er gegen das Ende der Aufnahmebohrung 4 stößt. Die Aufnahmebohrung 4 ist leicht konisch, um eine Entformung beim Herstellen des Halteelements 1 zu gewährleisten. Der Käfig 12 wird am tiefsten Punkt der Aufnahmebohrung 4 montiert und dort kraftschlüssig festgeklemmt. Da das Halteelement gegen den Dämmstoff 15 drückt, ist der Käfig 12 nach oben vorgespannt, so dass die Sperrkörper 11 in Eingriff mit dem Gewinde 7 gehalten werden. Wird das Halteelement 1 in Richtung des gekrümmten Pfeils in Fig. 7 in Uhrzeigerrichtung gedreht, dreht sich also der Käfig 12 mit und die Sperrkörper 11 wandern entlang dem Gewinde 7 nach unten. Dadurch kann das Halteelement 1 mit dem Halteteller 2 nach unten, in Richtung auf dem Dämmstoff 15 zu, geschraubt werden.

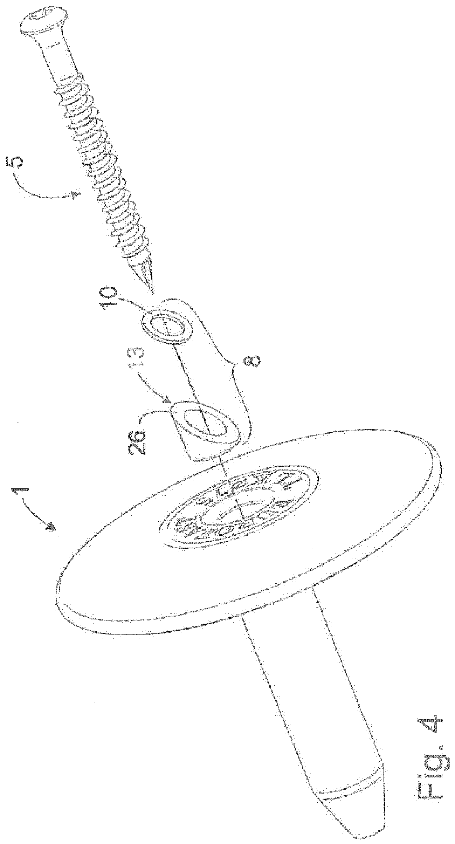

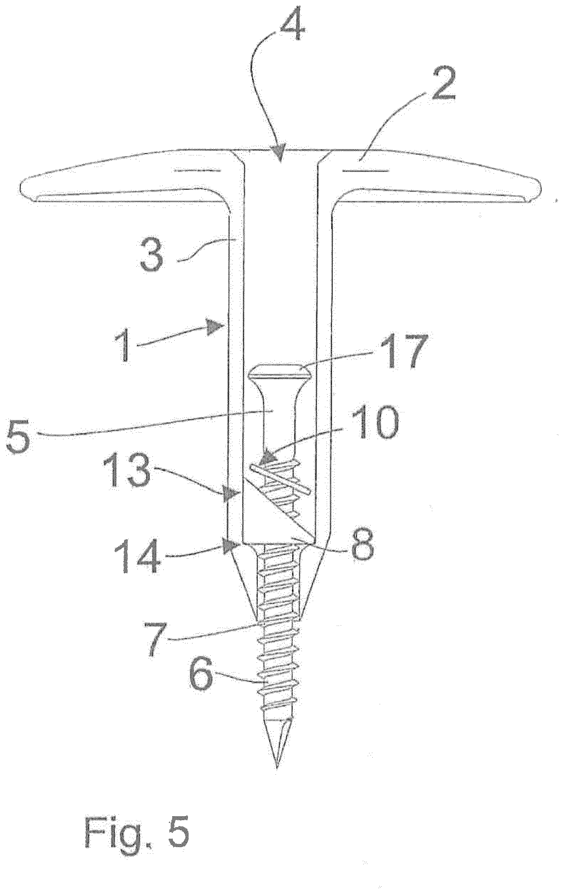

Die Darstellung der Fig. 4 zeigt ein Befestigungselement gemäß einer weiteren bevorzugten Ausführungsform der Erfindung. Die Schraube 5 und das Halteelement 1 sind dabei identisch ausgebildet wie bei dem Befestigungselement der Fig. 1 und werden daher nicht erneut erläutert. Die Sperrmittel 8 weisen eine zylindrische Buchse 13 auf, deren Stirnfläche 26 relativ zur Längsrichtung des Schafts der Schraube 5 abgeschrägt ist, sowie eine Sperrscheibe 28, die in Form einer Kreisringscheibe ausgebildet ist. Die Buchse 13 ist dafür vorgesehen, in der Aufnahmebohrung 4 aufgenommen zu werden, siehe Fig. 5, und zwar auf dem Absatz der Aufnahmebohrung 4, an dem sich der Innendurchmesser der Aufnahmebohrung 4 verringert. Die Buchse 13 kann somit in der Darstellung der Fig. 5 nicht weiter nach unten in die Aufnahmebohrung 4 hineingeschoben werden. Die Buchse 13 ist in der Aufnahmebohrung 4 fixiert, beispielsweise eingepresst oder eingeklebt, oder einstückig mit dem Halteelement 1 ausgebildet.

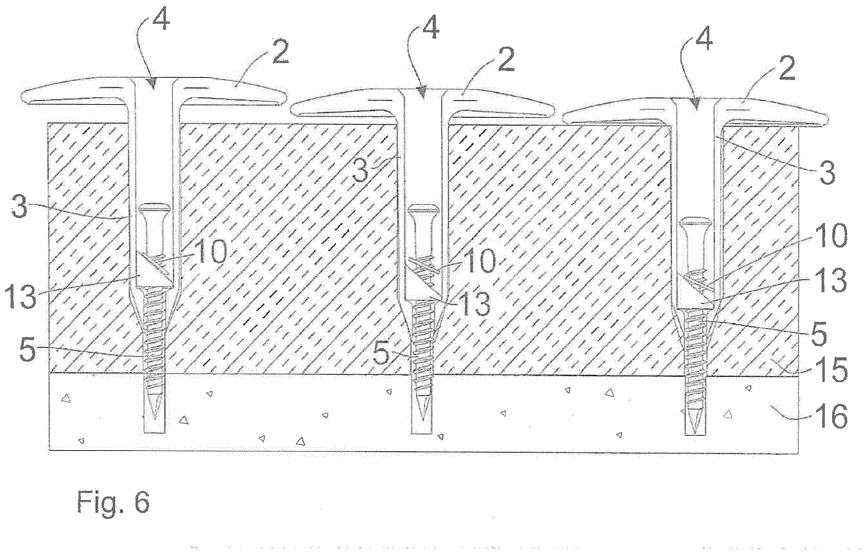

Die Sperrscheibe 10 wird auf die Schraube 5 aufgefädelt. Ein Durchmesser der Durchgangsöffnung in der Scheibe 10 ist größer als ein Außendurchmesser des Gewindes der Schraube 5. Die Scheibe 10 kann somit im Zustand der Fig. 5 entlang dem Gewinde nach unten gelangen, bis sie auf der schrägen Stirnfläche der Buchse 13 aufliegt. Wenn die Scheibe 10 dann schräg auf der Stirnfläche der Buchse 13 aufliegt, so gelangt ihre in Fig. 5 links dargestellte Seite allein durch die Schwerkraft in Eingriff mit einem Bereich zwischen zwei Gewindeflanken des Gewindes 7 der Schraube 5. In diesem Zustand kann die Schraube 5 noch problemlos durch die Scheibe 10 und die Buchse 13 hindurch in den Untergrund eingeschraubt werden. Es ist auch möglich, wie in Fig. 5 zu erkennen ist, das Halteelement 1 entlang der Schraube 5 nach unten zu schieben. Im Zustand der Fig. 5 ist ein Abstand zwischen der Scheibe 10 und der schrägen Stirnfläche der Buchse 13 dargestellt. Die Scheibe 10 kann dann, wieder der Schwerkraft folgend, nachrutschen, bis sie wieder auf der schrägen Stirnfläche der Buchse 13 aufliegt. Eine Bewegung des Halteelements 1 relativ zur Schraube 5 in Fig. 5 nach oben wird aber durch die zwischen zwei Gewindeflanken verkeilte Scheibe 10 gesperrt. Dies wird nachfolgend noch anhand der Fig. 6 erläutert.

In dem in Fig. 6 linken Zustand ist die Schraube 5 mit ihrem Gewinde bereits abschnittsweise in den Untergrund 16 eingeschraubt und damit bereits sicher verankert. Der Halteteller 2 ist aber noch im Abstand von der Oberseite des Dämmstoffs 15 angeordnet. Die Scheibe 10 liegt auf der schrägen Stirnfläche der Buchse 13 auf.

Um das Befestigungselement von Fig. 6 aus dem Zustand gemäß der linken Darstellung in Fig. 6 in den Zustand gemäß der rechten Darstellung in Fig. 6 zu überführen, wird durch eine Bedienperson Druck auf den Halteteller 2 in Richtung des Untergrunds 16 ausgeübt. Dabei wird auch hier das Haltelement 1 in der Befestigungsrichtung verlagert, in Fig. 6 also nach unten. Die Scheibe 10, die in der linken Darstellung an einer Schräge der Buchse 13 anliegt, folgt schwerkraftbedingt in Befestigungsrichtung, wobei wenigstens zeitweise ein Abstand zwischen der Scheibe 10 und der schrägen Stirnfläche der Buchse 13 liegt, wie in der mittleren Darstellung der Fig. 6 gezeigt ist. Nach Erreichen einer Endposition, in welcher der Halteteller 2 an der Oberseite des Dämmstoffs 15 anliegt, rutscht die Scheibe 10 nach unten und liegt wieder an der schrägen Stirnfläche der Buchse 13 an. Eine Zugbelastung des Halteelements 1, also eine Bewegung des Halteelements 1 entgegen der Befestigungsrichtung in Fig. 6 nach oben, führt dazu, dass die Scheibe 10 zwischen zwei Gewindeflanken des Gewindes 7 eingreift. Dies bewirkt eine Verlagerung der Scheibe 10 in eine in einer Betrachtungsebene der Fig. 6 weniger schräge Position, wobei die Scheibe einerseits zwischen zwei Gewindeflanken eingreift und andererseits sich gegen eine Innenwand der Aufnahmebohrung 4 verklemmt und dabei eine Bewegung des Halteelements 1 entgegen der Befestigungsrichtung blockiert, wie in Fig. 6 ganz rechts dargestellt ist. Somit wird dem Lockern des Befestigungselements entgegengewirkt und der Halteteller 2 kann ausgehend von der Position ganz rechts in Fig. 6 nicht nach oben bewegt werden.

Die Buchse 13 und die Sperrscheibe 10 ermöglichen also eine Bewegung des Halteelements 1 und somit des Haltetellers 2 in Richtung auf den Untergrund 16 zu, da die Sperrscheibe 10 dann entlang dem Gewinde der Schraube 5 der Schwerkraft folgend der Buchse 13 nachrutscht. Auf diese Weise kann das Halteelement 1 ausgehend von dem in Fig. 6 links dargestellten Zustand in den in Fig. 6 ganz rechts dargestellten Zustand gebracht werden, in dem also der Halteteller 2 auf der Oberseite des Dämmstoffs 15 aufliegt, gegebenenfalls sogar unter Vorspannung.

Eine Bewegung des Haltetellers 2 von der Oberseite des Dämmstoffs weg, also von dem in Fig. 6 ganz rechts dargestellten Zustand in den in Fig. 6 ganz links dargestellten Zustand, wird hingegen durch die Sperrscheibe 10 verhindert, die sich dann zwischen zwei Gewindeflanken des Gewindes der Schraube 5 und der Innenwand der Aufnahmebohrung 4 verkeilt, wie in Fig. 6 ganz rechts dargestellt ist, und dadurch eine Bewegung der Buchse 13 nach oben, also in Richtung auf den Schraubenkopf der Schraube 5 zu, blockiert.

Fig. 7 zeigt schematisch das Einschrauben des Halteelements 1 in Richtung auf den Dämmstoff 15 zu entlang dem Gewinde 7 der bereits im Untergrund 16 verankerten Schraube 15.

Ein Werkzeug 30, beispielsweise ein Außensechskant, greift in die passend gestaltete Aufnahmebohrung 4 des Halteelements 1 ein, so dass dieses relativ zur Schraube 5 verdreht werden kann. Wie zuvor erläutert wurde, kann auch auf diese Weise der Halteteller 2 in Anlage an den Dämmstoff 15 geschraubt oder sogar gegen diesen vorgespannt werden.

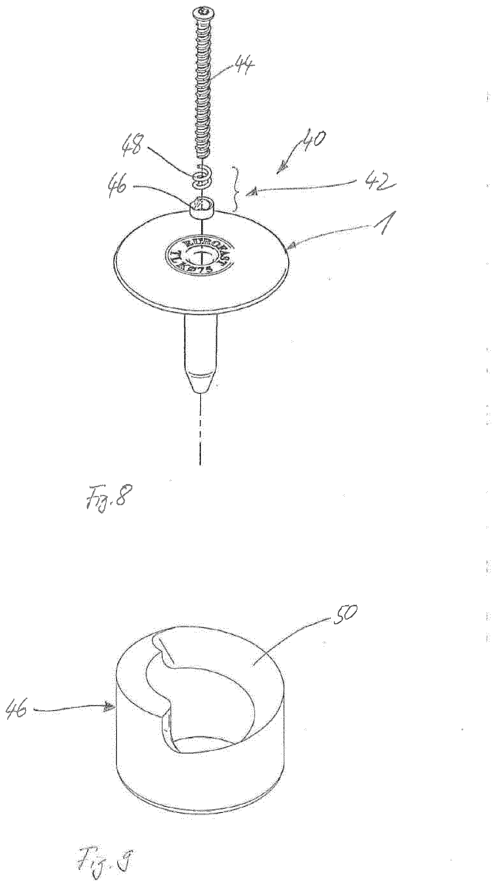

Fig. 8 zeigt ein Befestigungselement 40 gemäß einer weiteren Ausführungsform der Erfindung in auseinandergezogener Darstellung. Das Befestigungselement 40 der Fig. 8 unterscheidet sich von den Befestigungsmitteln der Fig. 1 bis 7 lediglich durch die Ausbildung der Sperrmittel 42 und der Schraube 44. Das Halteelement ist hingegen identisch ausgebildet wie bei den Befestigungsmitteln der Fig. 1 bis 7.

Die Sperrmittel 42 weisen eine Buchse 46 und einen Sperrkörper in Form einer Schraubenfeder 48 auf. Um das Befestigungsmittel 40 vorzumontieren, wird zunächst die Schraubenfeder 48 auf den Schaft der Schraube 44 aufgeschoben. Ein Innendurchmesser der Schraubenfeder 48 ist größer als ein Außendurchmesser des Gewindes der Schraube 44 so dass die Schraubenfeder 48 in sehr einfacher Weise auf den Schaft der Schraube 44, aufgeschoben werden kann. Ein Innendurchmesser der Schraubenfeder 48 ist kleiner als ein Außendurchmesser des Schraubenkopfs der Schraube 44.

Nach der Schraubenfeder 48 wird die Buchse 46 auf den Schaft der Schraube 44 aufgeschoben. Ein Innendurchmesser der Buchse 46 ist größer als ein Außendurchmesser des Gewindes der Schraube 44 und der Innendurchmesser der Buchse 46 ist kleiner als ein Außendurchmesser des Kopfes der Schraube 44. Zusammen mit der Buchse 46 und der Schraubenfeder 48 wird die Schraube 44 dann in die Aufnahmebohrung des Halteelements 1 eingeschoben, wie dies bereits anhand der Befestigungselemente der Fig. 1 bis 7 erläutert wurde.

Die Buchse 46 ist in einer Ansicht von schräg oben in Fig. 9 dargestellt. Die Buchse 46 ist grundsätzlich zylindrisch ausgeführt, weist aber auf ihrer, in Fig. 9 oben liegenden und im montierten Zustand dem Schraubenkopf der Schraube 44 zugewandten Stirnseite eine wendelförmige Anlagefläche 50 auf. Die wendelförmige Anlagefläche 50 ist nach innen, zur Mittellängsachse der Buchse 46 hin geneigt. Die wendelförmige Anlagefläche erstreckt sich über einen Winkel von 270° über die Stirnseite der Buchse 46. Eine Steigung der wendelförmigen Anlagefläche 50 entspricht der Steigung des Gewindes der Schraube 44. Die wendelförmige Anlagefläche 50 ist dafür vorgesehen, den Sperrkörper, also die Schraubenfeder 48, bei einer Bewegung der Buchse 46 relativ zur Schraube 44 nach oben in Richtung auf den Schaft der Schraube 44 rutschen zu lassen, bis ein Abschnitt der Schraubenfeder 48 am Schaft der Schraube 44 in einem Bereich zwischen den Gewindeflanken des Gewindes der Schraube 44 anliegt. In dieser Position kann die Schraubenfeder 48 als Sperrkörper dann eine Sperrwirkung entfalten. Denn es ist dann nicht mehr möglich, die Buchse 46 weiter entlang dem Schaft der Schraube 44 in Richtung auf den Schraubenkopf zu zu bewegen, da die Schraubenfeder diese Relativbewegung sperrt.

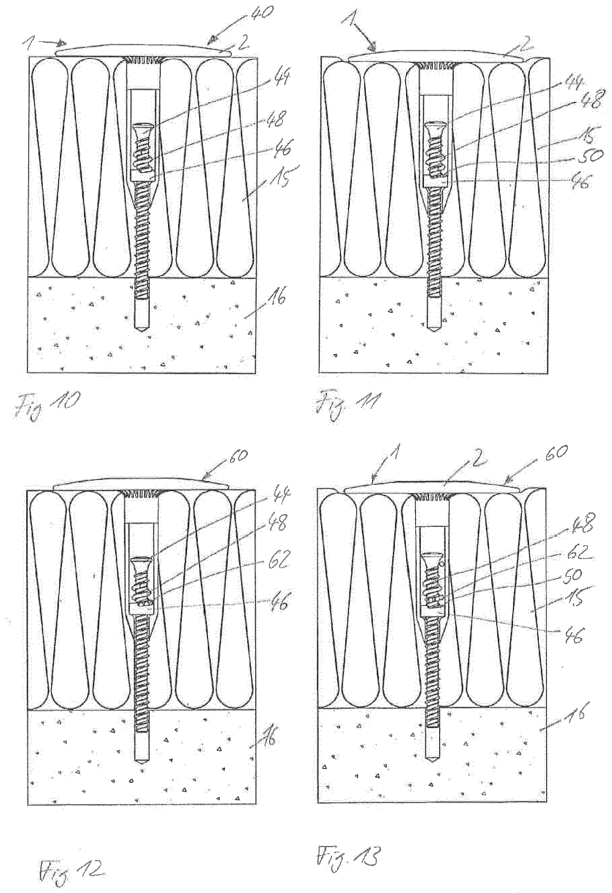

Fig. 10 zeigt eine teilweise geschnittene Ansicht des Befestigungselements 40 im montierten Zustand. Wie bereits anhand der Fig. 1 bis 7 beschrieben wurde, ist das Befestigungselement 40 an einem Untergrund 16 befestigt worden, indem die Schraube 44 ein Stück weit in eine Bohrung im Untergrund 16 hineingeschraubt wurde. Die Schraube 44 ist beispielsweise als Betonschraube ausgebildet und kann ohne Zwischenfügen eines Dübels unmittelbar in den Untergrund 16 eingeschraubt werden. Der Untergrund 16 bildet wieder eine Dachfläche, auf die der Dämmstoff 15 aufgelegt ist. Der Halteteller 2 des Halteelements 1 liegt auf der Oberseite des Dämmstoffes 15 auf. Die Schraubenfeder 48 liegt abschnittsweise auf der wendelförmigen Anlagefläche 50 auf der Stirnseite der Buchse 46 auf, die dem Schraubenkopf der Schraube 44 zugewandt ist. Es ist Fig. 10 zu entnehmen, dass die Schraubenfeder 48 dadurch in dem Bereich, in dem sie auf der Anlagefläche 50 der Buchse 46 aufliegt, gleichzeitig die in Fig. 10 unten angeordnete Fläche einer Gewindeflanke des Gewindes der Schraube 44 kontaktiert. Im Zustand der Fig. 10 ist somit eine Bewegung der Buchse 46 nach oben, in Richtung auf den Schraubenkopf der Schraube 44 zu, durch die Schraubenfeder 48 gesperrt. Infolgedessen kann auch das Halteelement 1 ausgehend vom Zustand der Fig. 10 nicht nach oben, also von der Oberseite des Dämmstoffs 15 weg, bewegt werden.

Um das Halteelement 1 aber vorspannen zu können, ist es bei dem erfindungsgemäßen Befestigungselement 40 möglich, das Halteelement 1 in Richtung auf den Untergrund 16 zu drücken und dadurch den Dämmstoff 15 ein Stück weit zu komprimieren. Dieser Zustand ist in Fig. 11 dargestellt. Der Halteteller 2 drückt nun die Oberseite des Dämmstoffs 15 ein Stück weit ein. Da das Halteelement 1 ein Stück weit nach unten bewegt wurde, ist auch die Buchse 46 entlang dem Schaft der Schraube 44 ein Stück weit nach unten gerutscht und hat sich infolgedessen ein Stück weit von der Schraubenfeder 48 entfernt. Der Zustand der Fig. 11 ist kein dauerhafter Zustand, sondern die Schraubenfeder 18 wird nun der Bewegung der Buchse 46 folgen und nach unten rutschen, bis das untere Ende der Schraubenfeder 48 auf der Anlagefläche 50 der Buchse 46 aufliegt. Dieser nachgerutschte Zustand der Schraubenfeder 48 ist in Fig. 11 nicht dargestellt. Sobald die Schraubenfeder 48 wieder auf der Anlagefläche 50 der Buchse 46 aufliegt, wird sie durch die Neigung der Anlagefläche 50 nach innen, in Richtung auf der Schaft der Schraube 44 zu, in dem Bereich, in dem sie auf der Anlagefläche 50 aufliegt, nach innen rutschen. Dadurch gelangt der auf der Anlagefläche 50 aufliegende Abschnitt der Schraubenfeder 48 wieder in die Position der Fig. 10, in der dieser Abschnitt der Schraubenfeder 48 also einerseits auf der Anlagefläche 50 der Buchse 46 aufliegt und andererseits auch an der Unterseite einer Gewindeflanke des Gewindes der Schraube 44 anliegt. Dadurch sperrt die Schraubenfeder 48 eine Bewegung der Buchse 46 nach oben. Das Halteelement 1 wird dadurch in der in Fig. 11 dargestellten Position gehalten.

Fig. 12 zeigt eine weitere Ausführungsform eines erfindungsgemäßen Befestigungselements 60, im teilweise geschnittenen und montierten Zustand. Das Befestigungselement 60 der Fig. 12 unterscheidet sich von dem Befestigungselement 40 der Fig. 8 bis 11 aber lediglich dadurch, dass zusätzlich zur Schraubenfeder 48 noch mehrere Kugeln 62 als Sperrkörper vorgesehen sind. Im Zustand der Fig. 12 liegen mehrere Kugeln auf der Anlagefläche 50 der Buchse 46 auf und werden durch die Neigung der Anlagefläche 50 nach innen dadurch nach innen, in Richtung auf den Schaft der Schraube 44 zu rutschen oder rollen. Diese Bewegung wird gestoppt, sobald die Kugeln am Schaft der Schraube 44 im Bereich zwischen zwei Gewindeflanken anliegen. Eine Bewegung der Buchse 46 nach oben wird dann durch die Kugeln 62 gesperrt. Zusätzlich ist die Schraubenfeder 48 als Sperrkörper vorgesehen. Beispielsweise kann die Anlagefläche 50 der Buchse 46 so lang sein, dass einige Kugeln 62 und zusätzlich ein Abschnitt der Schraubenfeder 48 auf der Anlagefläche 50 aufliegen kann. Eine Sperrwirkung wird dann sowohl durch die Kugeln 62 als auch durch die Schraubenfeder 48 bewirkt.

Fig. 13 zeigt das Befestigungselement 60 der Fig. 12, wenn das Halteelement 1 und speziell der Halteteller 2 in Richtung auf den Untergrund 16 zu gedrückt wird. Der Dämmstoff 15 wird dadurch ein Stück weit komprimiert und die Buchse 46 rutscht, wie bereits anhand der Fig. 10 und 11 erläutert wurde, zusammen mit dem Halteelement 1 nach unten. Die Kugeln 62 und die Schraubenfeder 48 bleiben zunächst zurück, so dass sich ein Abstand zwischen der Anlagefläche 50 der Buchse 46 und den Kugeln 62 sowie der Schraubenfeder 48 ausbildet. Sowohl die Kugeln 62 als auch die Schraubenfeder 48 rutschen dann aber, der Schwerkraft folgend, nach, bis sie wieder die Position zur Buchse 46 eingenommen haben, die in Fig. 12 dargestellt ist. Bei Verwendung von Kugeln 62 und der Schraubenfeder 48 als Sperrkörper ist eine besonders sichere Sperrwirkung zu erwarten. Dies auch deshalb, da die Kugeln 62 beim Herunterdrücken des Halteelements 1 gemäß Fig. 13 schneller in Richtung auf die Buchse 46 nachrollen bzw. nachrutschen können als die Schraubenfeder 48.

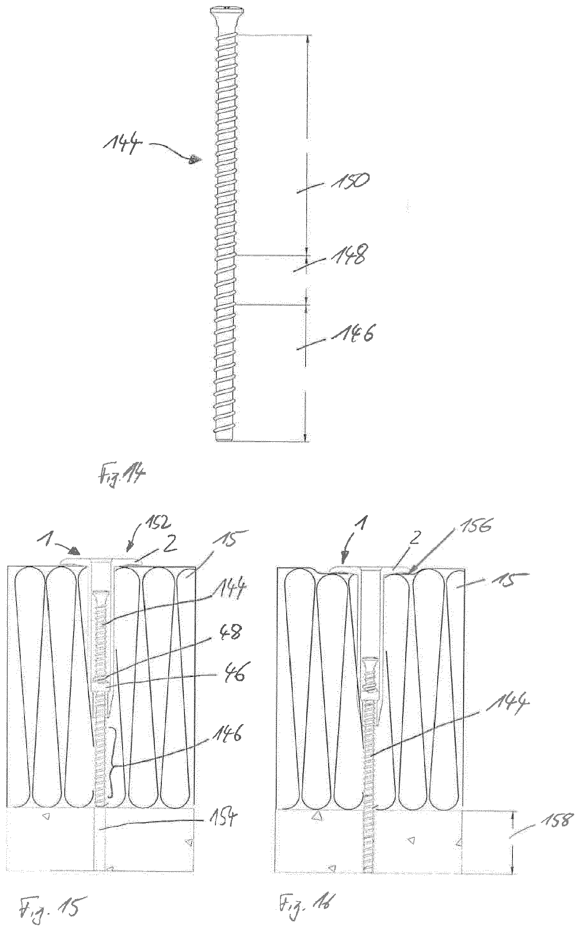

Fig. 14 zeigt eine Schraube 144 für ein Befestigungselement gemäß einer fünften Ausführungsform der Erfindung. Das Befestigungselement gemäß der fünften Ausführungsform der Erfindung ist bis auf die Schraube 144 gleich wie das Befestigungselement 40 der Fig. 8 bis 13 ausgebildet. Die einzelnen Bestandteile des Befestigungselements werden daher nicht erneut erläutert.

Im Unterschied zur Schraube 44, die ein Gewinde mit über die gesamte Länge des Schafts gleichmäßiger Steigung aufweist, ist das Gewinde der Schraube 144 mit mehreren Abschnitten mit unterschiedlicher Steigung versehen.

In einem ersten Abschnitt 146 ist das Gewinde der Schraube als Standard-Betongewinde mit einer ersten Steigung ausgebildet. Der erste Abschnitt erstreckt sich von dem in Fig. 14 unten angeordneten freien Ende der Schraube, das dem Schraubenkopf gegenüberliegt, bis zu einem Übergangsbereich 148. An den Übergangsbereich 148 schließt sich ein zweiter Abschnitt 150 des Gewindes an, in dem das Gewinde eine gegenüber dem ersten Abschnitt 146 geringere Steigung aufweist. Der Übergangsbereich 148 ist dafür vorgesehen, die Gewindesteigungen zwischen dem ersten Abschnitt 146 und dem zweiten Abschnitt 150 ineinander übergehen zu lassen. Das Gewinde der Schraube 144 weist einen einzigen, über die gesamte Länge des Gewindes durchgehenden und sich um den Schaft herumwindenden Gewindevorsprung auf, der aber eben, wie bereits erläutert wurde, unterschiedliche Steigungen des Gewindes definiert. Das Gewinde der Schraube 144 ist bei der dargestellten Ausführungsform eingängig ausgeführt, kann beispielsweise aber auch mehrgängig ausgeführt sein.

Fig. 15 zeigt eine teilweise geschnittene Darstellung des Befestigungselements 152 gemäß der fünften Ausführungsform im teilweise montierten Zustand. Wie ausgeführt wurde, sind mit Ausnahme der Schraube 144 sämtliche weiteren Bestandteile des Befestigungselements 152 identisch zu den bereits erläuterten Bestandteilen des Befestigungselements 40, wie dies in den Fig. 8 bis 13 dargestellt und auch erläutert wurde.

In der Darstellung der Fig. 15 ist das freie Ende der Schraube unmittelbar vor dem Beginn eines vorher gebohrten Lochs 154 in einem Untergrund angeordnet. Wird die Schraube 144 ausgehend von der in Fig. 15 dargestellten Stellung weitergedreht, greift das Betongewinde im ersten Abschnitt 146 in die Bohrung 154 ein und zieht die Schraube 144 dadurch in die Bohrung 154 hinein.

Bei konventionellen Befestigungselementen ist es problematisch, festzustellen, ob das Gewinde im Abschnitt 146 bereits ausreichend tief in den Untergrund eingreift. Mit dem Befestigungselement 152 gemäß den Fig. 14 bis 16 kann dieses Problem in überraschend einfacher Weise gelöst werden.

Während des Einschraubens der Schraube 144 greift die Schraubenfeder 48 zunächst in das Gewinde des ersten Abschnitts 146, dann in das Gewinde des Übergangsbereichs 148 und dann in das Gewinde des zweiten Abschnitts 150 ein. Die Länge des ersten Abschnitts 146, des Übergangsbereichs 148 und des zweiten Abschnitts 150 ist nun so bemessen, dass dann, sobald das Gewinde des ersten Abschnitts 146 ausreichend tief in die Bohrung 154 im Untergrund eingreift, die Schraubenfeder 48 in das Gewinde des zweiten Abschnitts 150 eingreift. Solange sich die Schraube dreht, wird dadurch der Vorschub der Schraube 144 in der Bohrung 154 größer sein als der Vorschub der Schraube 144 relativ zur Schraubenfeder 48 und zur Buchse 46. Dies ist dadurch verursacht, dass die Steigung des Gewindes im ersten Abschnitt 146 größer ist als die Steigung des Gewindes im zweiten Abschnitt 150. Mit anderen Worten wird also dann, sobald die Schraubenfeder 48 in das Gewinde des zweiten Abschnitts 150 eingreift, der Halteteller 2 zusammen mit der Buchse 46 und dem Halteelement 1 in Richtung auf den Untergrund und den Dämmstoff 15 zu bewegt. Der Halteteller 2 wird dadurch, siehe das Bezugszeichen 156 in Fig. 16, in die Oberfläche des Dämmstoffs 15 eingedrückt, wie dies in Fig. 16 dargestellt ist. Bei entsprechender Bemessung der Länge des ersten Abschnitts 146, des Übergangsbereichs 148 und des zweiten Abschnitts 150 sowie der Steigungen des Gewindes im ersten Abschnitt 146 und im zweiten Abschnitt 150 kann dadurch in einfacher Weise festgestellt werden, wenn die Mindesteinschraubtiefe 158 der Schraube 144 im Untergrund erreicht ist. Dies ist nämlich, siehe Fig. 16, dann der Fall, wenn der Halteteller 2 ein Stück weit in die Oberfläche des Dämmstoffs 15 eingedrückt ist. Die Mindesteinschraubtiefe 158, die Länge des ersten Abschnitts 146, die Länge des Übergangsabschnitts 148, die Länge des zweiten Abschnitts 150, die Dicke des Dämmstoffs 15 und die Länge des Halteelements 1 sind dabei zweckmäßigerweise so aufeinander abgestimmt, dass die Schraubenfeder 48 und die Buchse 4 im Übergangsabschnitt 148, teilweise im Übergangsabschnitt 148 und teilweise im zweiten Abschnitt 150 oder bereits vollständig im zweiten Abschnitt 150, angeordnet sind, sobald die Mindesteinschraubtiefe 158 der Schraube 144 in der Bohrung 154 erreicht ist.

Mit anderen Worten ist sichergestellt, dass die Mindesteinschraubtiefe 158 erreicht ist, sobald der Halteteller 2 beginnt, die Dämmung etwas einzudrücken. Dies ist bei konventionellen Befestigungselementen immer ungewiss. Die Dachbahn auf der Dämmung erhält durch das erfindungsgemäße Befestigungselement den nötigen Anpressdruck, da durch die unterschiedlichen Gewindesteigungen im ersten Abschnitt 146 und im zweiten Abschnitt 150, und speziell die gegenüber dem ersten Abschnitt 146 geringere Gewindesteigung im zweiten Abschnitt 150, beim Eindrehen der Schraube der Halteteller 2 sich mit anderer Geschwindigkeit in Richtung auf den Untergrund zu bewegt als die Schraube 144. Die Schraube 144 kann im Rahmen der Erfindung mit allen beschriebenen und/oder in den Figuren 1 bis 16 gezeigten Befestigungselementen kombiniert werden.

Die unterschiedlichen Gewinde in den Abschnitten 146, 148 und 150 der Schraube 144 können problemlos mit den erfindungsgemäß vorgesehenen Sperrkörpern kombiniert werden, beispielsweise mit walzenförmigen Sperrkörpern, kugelförmigen Sperrkörpern, wendelförmigen Sperrkörpern, scheibenartigen Sperrkörpern, da gemäß der Erfindung die Sperrkörper aus ihrer Eingriffsposition in das Gewinde heraus und wieder zurückbewegt werden können. Mit Muttern, wie sie bei konventionellen Befestigungselementen vorgesehen sind, lässt sich ein solches Einrücken und Ausrücken der Sperrkörper in das Gewinde nicht bewerkstelligen, und solche Muttern können infolgedessen auch nicht mit unterschiedlichen Gewindesteigungen an einer Schraube kombiniert werden. Allen Ausführungsformen der Erfindung ist darüber hinaus gemeinsam, dass der Halteteller 2 an dem Halteelement 1 im montierten Zustand, s. beispielsweise Fig. 16, auf den Untergrund zu gedrückt werden kann und dann automatisch wieder durch die elastische Wirkung des Dämmstoffs 15 zurückfedern kann. Dies ist beispielsweise dann wichtig, wenn eine Dachfläche betreten wird und der Halteteller 2 in Richtung auf den Untergrund zu belastet wird. Denn das Halteelement 1 kann auf dem Schaft der Schraube 144 nach unten rutschen, lediglich in der Richtung nach oben wird eine Bewegung des Halteelements 1 mit dem Halteteller 2 durch die Buchse 46 und die Schraubenfeder 48 blockiert.

## Patentansprüche

1. Befestigungselement zum Befestigen von Dämmstoff an einem Untergrund, insbesondere auf einem Gebäudedach oder an einer Gebäudewand, mit einem Halteelement (1), das einen Halteteller (2) und einen sich vom Halteteller (2) aus erstreckenden rohrartigen Halteabschnitt (3) aufweist, wobei das Halteelement (1) eine sich durch den Halteteller (2) und den Halteabschnitt (3) erstreckende Aufnahmebohrung (4) aufweist, und mit einer abschnittsweise in der Aufnahmebohrung (4) angeordneten Schraube (5), wobei die Schraube (5) einen Schraubenkopf mit einer Antriebsausbildung und einen Schaft (6) aufweist, der wenigstens abschnittsweise mit einem Gewinde (7) versehen ist, **dadurch gekennzeichnet, dass** das Gewinde (7) mehrere Abschnitte (146, 148, 150) mit unterschiedlichen Steigungen aufweist, wobei eine erste Steigung in einem vom freien Ende der Schraube, das dem Schraubenkopf gegenüberliegt, ausgehenden ersten Abschnitt (146) größer ist als in einem zwischen dem schraubenkopfseitigen Ende des ersten Abschnitts (146) und dem Schraubenkopf ausgeordneten zweiten Abschnitt (150).

2. Befestigungselement nach Anspruch 1, **dadurch gekennzeichnet, dass** zwischen dem ersten Abschnitt (146) und dem zweiten Abschnitt (150) ein Übergangsabschnitt (148) angeordnet ist.

3. Befestigungselement nach Anspruch 1, **dadurch gekennzeichnet, dass** der zweite Abschnitt (150) sich bis zum Schraubenkopf erstreckt.

4. Befestigungselement nach einem der Ansprüche 1 bis 3, **dadurch gekennzeichnet, dass** in der Aufnahmebohrung (4) Sperrmittel (8) vorgesehen sind, die einerseits an dem Halteelement (1) und andererseits an dem Schaft (6) der Schraube (5) angreifen, um eine Bewegung des Haltetellers (2) relativ zur Schraube (5) in Richtung auf das dem Schraubenkopf (17) gegenüberliegende Schraubenende zu ermöglichen und um eine Bewegung des Haltetellers (2) relativ zur Schraube (5) in der Gegenrichtung, von dem Schraubenende weg, zu sperren.

5. Befestigungselement nach Anspruch 2, **dadurch gekennzeichnet, dass** die Sperrmittel (8) einen in der Aufnahmebohrung angeordneten Käfig (12) und wenigstens einen in dem Käfig (12) angeordneten Sperrkörper (9) aufweisen, wobei sich der Schaft (6) der Schraube (5) durch den Käfig hindurcherstreckt und wobei der wenigstens eine Sperrkörper (9) zwischen einer Innenwand des Käfigs (12) und dem Schaft (6) angeordnet ist.

6. Befestigungselement nach Anspruch 4 oder 5, **dadurch gekennzeichnet, dass** die Sperrmittel eine Buchse (46) aufweisen, die in der Aufnahmebohrung angeordnet ist und durch die sich der Schaft der Schraube hindurcherstreckt, wobei eine dem Schraubenkopf zugewandte Stirnseite der Buchse wenigstens abschnittsweise mit einer wendelförmigen und nach innen, zum Schaft der Schraube hin geneigten Anlagefläche für wenigstens einen Sperrkörper versehen ist.

7. Befestigungselement nach Anspruch 6, **dadurch gekennzeichnet, dass** eine Steigung der wendelförmigen Anlagefläche im Wesentlichen der Steigung des Gewindes der Schraube entspricht.

8. Befestigungselement nach Anspruch 6 oder 7, **dadurch gekennzeichnet, dass** sich die wendelförmige Anlagefläche über einen Winkel von 45° bis 360°, insbesondere 270°, erstreckt.

9. Befestigungselement nach einem der Ansprüche 6 bis 8, **dadurch gekennzeichnet, dass** ein als Schraubenfeder (48) ausgebildeter Sperrkörper vorgesehen ist, wobei ein Innendurchmesser der Schraubenfeder (48) größer ist als ein Außendurchmesser des Gewindes der Schraube (144).

10. Befestigungselement nach Anspruch 9, **dadurch gekennzeichnet, dass** eine Steigung der Schraubenfeder (48) zwischen der Steigung des Gewindes der Schraube im ersten Abschnitt (146) und einer Steigung des Gewindes der Schraube (144) im zweiten Abschnitt (150) der Schraube (144) liegt.

11. Befestigungselement nach wenigstens einem der vorstehenden Ansprüche, **dadurch gekennzeichnet, dass** die Aufnahmebohrung (4) im Halteelement (1) eine Stufe oder eine Verengung aufweist, wobei ein Innendurchmesser der Aufnahmebohrung (4) zwischen dem Halteteller (2) und der Stufe oder Verengung größer ist als ein Durchmesser des Schraubenkopfes (17) und ein Innendurchmesser der Aufnahmebohrung (4) an der Stufe oder Verengung kleiner ist als der Durchmesser des Schraubenkopfes (17) und größer ist als der Außendurchmesser des Schafts (6).
